Europäisches Patentamt

European Patent Office

Office européen des brevets

(19)

(11) Veröffentlichungsnummer: **0 151 789**
**B1**

(12) # EUROPÄISCHE PATENTSCHRIFT

(45) Veröffentlichungstag der Patentschrift:
**01.06.88**

(51) Int. Cl.⁴: **G 11 B 20/18**

(21) Anmeldenummer: **84116148.2**

(22) Anmeldetag: **21.12.84**

(54) Speicherungsverfahren für eine in Fernmeldeanlagen, insbesondere Fernsprechvermittlungsanlagen eingesetzte Speichereinrichtung.

(30) Priorität: **13.02.84 DE 3405073**

(43) Veröffentlichungstag der Anmeldung:
**21.08.85 Patentblatt 85/34**

(45) Bekanntmachung des Hinweises auf die Patenterteilung:
**01.06.88 Patentblatt 88/22**

(84) Benannte Vertragsstaaten:
**AT BE CH DE FR GB IT LI NL SE**

(56) Entgegenhaltungen:
**EP - A - 0 073 330
DE - A - 3 403 290
FR - A - 2 426 938
US - A - 4 225 941
US - A - 4 310 901**

**IBM TECHNICAL DISCLOSURE BULLETIN, Band 24, Nr. 1B, Juni 1981, Seiten 625-627, New York, US; A. GANGULY et al.: "Increased direct-access storage device yield through defective track handling in hardware"
PATENTS ABSTRACTS OF JAPAN, Band 2, Nr. 133, 8. November 1978, Seite 8121 E 78; & JP - A - 53 100 214 (FUJITSU K.K.) 01.09.1978
PATENTS ABSTRACTS OF JAPAN, Band 7, Nr. 270 (P-240)[1415], 2. Dezember 1983, Seite 74 P 240; & JP - A - 58 150 111 (NIPPON DENKI K.K.) 06.09.1983**

(73) Patentinhaber: **Siemens Aktiengesellschaft Berlin und München, Wittelsbacherplatz 2, D-8000 München 2 (DE)**

(72) Erfinder: **Karlstetter, Dieter. Dipl.-Ing., Kulturstrasse 27 F, D-8900 Augsburg (DE)**

## Beschreibung

Die Erfindung betrifft ein Speicherungsverfahren für eine in Fernmeldeanlagen, insbesondere Fernsprechvermittlungsanlagen, eingesetzte Speichereinrichtung, in der wenigstens ein durch Formatierung aus einer Vielzahl von Speicherelementen, z.B. Speichersektoren, einheitlichen Speichervolumens bestehender Gesamtspeicher, z.B. Magnetplatte für Magnetplattenspeicher, vorgesehen ist, und in der durch eine wählbare Anzahl von Speicherelementen grössenmässig bestimmte Speicherabschnitte von hinsichtlich ihrer Ansteuerung zusammenhängenden und mittels Adressen einzeln sukzessive ansteuerbaren Speicherelementen gebildet sind, und in der in einem Reserveabschnitt des Gesamtspeichers enthaltene Reserve-Speicherelemente vor einem der Bildung der ansteuerungsmässig zusammenhängenden Speicherabschnitte dienenden unmittelbaren Zugriff geschützt, also davon ausgeschlossen sind, und in der bei Defekt eines Speicherelementes diesem ein Reserve-Speicherelement zugeordnet wird, indem für das defekte Speicherelement die Ansteuerungsadresse des Reserve-Speicherelementes gespeichert wird, wodurch bei der einzeln-sukzessiven Ansteuerung der Speicherelemente eines Speicherabschnittes mit einem defekten Speicherelement bei Erreichen des letzteren statt seiner das diesem zugeordnete Reserve-Speicherelement in den Ansteuerzyklus eingereiht ist und anstelle des defekten Speicherelementes einem Schreibvorgang bzw. Lesevorgang bzw. Löschungsvorgang unterzogen wird. Ein solches Verfahren ist z.B. aus FR-A-2 426 938 bekannt.

In bekannten Speicheranordnungen, die nach diesem Verfahren arbeiten, enthält jedes der Speicherelemente zusätzlich zu dem den primären Zwecken der Speicherung irgendwelcher Informationen dienenden Speicherelement-Hauptbestandteil je ein Adressfeld, in das seine eigene Adresse eingetragen ist. Die Ansteuerung kann durch einen Suchvorgang mittels einer jeweils vorgegebenen Adresse erfolgen, die jedes Mal mit der aus dem Adressfeld eines Speicherelementes gelesenen Adresse verglichen wird; bei Übereinstimmung ist dann also das anzusteuernde Speicherelement per Suchvorgang angesteuert. Die Ansteuerung kann aber auch gezielt mittels Ansteuerdaten erfolgen, die zum Beispiel jeweils Zeile und Spalte in einem Koordinatenfeld oder Zylinder und Sektor auf einer Magnetplatte angeben. In diesem Fall dient die im jeweiligen Adressfeld gespeicherte Adresse zur Kontrolle einer vorher richtig erfolgten Ansteuerung.

Es kommt nun immer wieder vor, dass das Speichermedium, aus dem die Speicherelemente des Gesamtspeichers jeweils mit Speicherelement-Hauptbestandteil und Adressfeld bestehen, an irgendwelchen Stellen fehlerhaft wird. Das betrifft in der Regel immer nur einzelne Speicherelemente. Eine solche Fehlerhaftigkeit kann darin bestehen, dass ein Speicherelement nicht mehr beschreibbar, nicht mehr lesbar oder nicht mehr löschbar ist. Deshalb ist bereits vorgesehen worden, ausser den genannten Speicherabschnitten im Gesamtspeicher einen Reserveabschnitt von Reserve-Speicherelementen vorzusehen. Diese können nicht unmittelbar zur Bildung von Speicherabschnitten herangezogen werden, wie die übrigen Speicherelemente. Aus letzteren lassen sich Speicherabschnitte beliebiger Anzahl von Speicherelementen bilden. – Es wird jeweils ein Speicherabschnitt für einen bestimmten Speicherungszweck gebildet, z.B. zur Speicherung eines Programmes oder eines Teilprogrammes oder von Daten über eine Koppelfeldkonfiguration oder dergleichen. Da der Bedarf an Speichervolumen von Speicherungszweck zu Speicherungszweck in der Regel verschieden gross ist, ist bei der Bildung von Speicherabschnitten die Anzahl von Speicherelementen wählbar. Eine Speicherzugriff-Einrichtung hat dabei auf die Speicherelemente freien Zugriff und kann aus ihnen je nach Speichervolumen-Bedarf Speicherabschnitte beliebiger Grösse hinsichtlich der Anzahl von adressenmässig zusammenhängenden Speicherelementen bilden. Hiervon aber sind die Reserve-Speicherelemente des Reserveabschnittes ausgenommen. Der Speicherzugriff-Einrichtung ist der freie Zugriff auf die Reserve-Speicherelemente also versperrt.

Die Reserve-Speicherelemente können vielmehr bei Defekt von Speicherelementen einzeln diesen zugeordnet werden, und zwar als Ersatz für die mit dem defekten Speicherelement verloren gegangene Speicherkapazität; bei dieser Zuordnung wird immer je ein Reserve-Speicherelement einem defekten Speicherelement individuell zugeordnet. Hierfür ist vorgesehen, sowohl im Adressfeld eines Speicherelementes ein Hinweiszeichen zu speichern, wenn das betreffende Speicherelement defekt ist, als auch ihm ein Reserve-Speicherelement dadurch zuzuordnen, dass in das Adressfeld des letzteren die Adresse des defekten Speicherelementes eingeschrieben wird. Werden die Speicherelemente zur Ausführung eines Schreibvorganges, Lesevorganges bzw. Löschvorganges sukzessive nacheinander angesteuert, und wird dabei das defekte Speicherelement erreicht, so erscheint beim Lesen seines Adressfeldes zugleich das Hinweiszeichen, welches den bestehenden Defekt anzeigt und bewirkt, dass statt diesem Speicherelement das ihm zugeordnete Reserve-Speicherelement angesteuert wird. Dies geschieht in der Weise, dass der Reserveabschnitt angesteuert wird, und dass sukzessive nacheinander die Adressfelder der Reserve-Speicherelemente gelesen werden und dass bei Übereinstimmung der jeweils gerade gelesenen Adresse mit der Adresse des betreffenden defekten Speicherelementes dieser Suchvorgang beendet wird, weil das ihm zugeordnete Reserve-Speicherelement gefunden ist, also durch diesen Suchvorgang angesteuert ist.

Die zuvor beschriebene Ansteuerung eines einem defekten Speicherelement zugeordneten Reserve-Speicherelementes ist zeitraubend. Ausserdem kann bei einem Speicherelement nicht nur dessen Speicherelement-Hauptbestandteil, sondern auch sein Adressfeld fehlerbehaftet sein. In diesem Fall ist das Adressfeld nicht lesbar oder aus dem Leseergebnis zeigt sich die Fehlerhaftigkeit. Dann wird die beschriebene Suche im Reserve-Speicherabschnitt durchgeführt. Dabei kann aber auch das Hinweiszeichen fehlen, oder es kann fälschlich vorgetäuscht sein. Der eine oder der andere dieser beiden Fehler kann zur Folge haben, dass einem defekten Speicherelement, dem bereits ein Reserve-Speicherelement zugeordnet ist, fälschlich erneut ein Reserve-Speicherelement zugeordnet wird, oder dass das einem defekten Speicherelement zugeordnete Reserve-Speicherelement gesucht wird, dass aber eine hierfür vorausgesetzte Zuordnung noch gar nicht erfolgt ist. Letztlich werden nun auch alle derartigen Falschfunktionen erkennbar, also eine doppelte Zuordnung von Reserve-Speicherelementen zu einem defekten Speicherelement oder das Fehlen einer solchen Zuordnung. Aber alle dadurch zur Richtigstellung erforderlich werdenden zusätzlichen Prozeduren, kosten zusätzlichen Aufwand für entsprechende Programmabläufe und kosten vor allem Zeit, verlangsamen also die Vorgangsabläufe bei der Ansteuform. der Speicherelemente eines Speicherabschnittes.

In Defekt-Fällen solcher Art werden zunächst Lesewiederholungen durchgeführt, die bekanntlich sehr zeitraubend sein können. Dabei wird jeweils das gleiche Speicherelement erneut angesteuert. Solche Lesewiederholungen müssen nicht nur bei erstmaligem Auftreten eines Fehlers im Adressfeld durchgeführt werden, sondern auch dann, wenn dem defekt gewordenen Speicherelement (defekt im Adressfeld) bereits zu früherem Zeitpunkt ein Reserve-Speicherelement zugeordnet worden ist,also jedesmal erneut. Führen solche Lesewiederholungen dennoch nicht zu einem eindeutigen, brauchbaren Leseergebnis, so wird im Reservebereich eine Suche nach einem dem defekten Speicherelement bereits zugeordneten Reserve-Speicherelement gestartet, weil es ja sein kann, dass der aufgetretene Defekt bereits bei einem früheren Betriebsfall erkannt wurde und zu einem entsprechenden Zuordnungsvorgang geführt hat. Wird dabei jedoch kein Reserve-Speicherelement mit der Adresse des defekt gewordenen Speicherelementes gefunden, so ist daran erkennbar, dass ein solcher Zuordnungsvorgang noch nicht stattgefunden hat und zu dem betreffenden Zeitpunkt erst noch durchgeführt werden muss. Diese Vorgänge sind alle recht umständlich und zeitraubend.

Ferner treten bekanntlich auch Fehler sporadischer Art auf, d.h. Fehler, die dann zufällig zeitweilig sich auswirken und dann auch wieder nicht. Solche Defekte können z.B. durch wandernde Staub-Partikel hervorgerufen werden. Wenn nun ein solcher sporadischer Fehler in einem Betriebsfall zur Zuordnung eines Reserve-Speicherelementes zu einem defekt gewordenen Speicherelement geführt hat und eine entsprechende Information in dem Reserve-Speicherelement gespeichert worden ist, und wenn dieser Defekt bei einem nächsten Betriebsfall zufällig wieder verschwunden ist, erfolgt ein Lesen der betreffenden Information statt im Reserve-Speicherelement vielmehr in dem entsprechenden (ursprünglichen) Speicherelement, dem das Reserve-Speicherelement in dem früheren Betriebsfall, d.h. bei der früheren Bearbeitung, bereits zugeordnet worden ist. Das kann dazu führen, dass eine falsche Information gelesen wird.

Darüber hinaus kann ein aufgetretener Defekt darin bestehen, dass ein den Beginn eines Speicherelementes markierendes Speicherelement-Beginn-Zeichen unlesbar geworden ist. In einem solchen Defektfall kann die Suche nach diesem Speicherelement-Beginn-Zeichen fortgesetzt werden und entweder durch ein späteres, mit dem Speicherelement-Beginn-Zeichen verwechselbares anderweitiges Zeichen vorgetäuscht werden, wodurch der gesamte Lesevorgang bezüglich des betreffenden Adressfeldes verschoben stattfindet und folglich zufällig falschen Ergebnissen führt, oder es wird ein solches verwechselbares Speicherelement-Beginn-Zeichen nicht gefunden, und erst eine Zeitüberwachung signalisiert, dass der Suchvorgang zu keinem Ergebnis geführt hat. Solche Defektfälle haben unüberschaubare und praktisch kaum noch beherrschbare Konsequenzen.

Es ist deshalb bereits aus DE-A-3 403 290 für eine nach dem eingangs angegebenen Verfahren arbeitende Speicheranordnung vorgeschlagen worden, in einem zusätzlich vorgesehenen Sonderspeicher die Adressen aller defekten Speicherelemente zu sammeln und in Einzelzuordnung zu jenen die Adressen der jeweils zugeordneten Reserve-Speicherelemente zu speichern, ferner während eines Schreib- bzw. Lese- bzw. Löschvorganges an einem Speicherelement anhand der sich aus dessen Ansteuerungsadresse aufgrund der Adressen-Sukzession ergebenden Ansteuerungsadresse des als nächstes anzusteuernden Speicherelementes mittels eines Suchvorganges in dem Sonderspeicher zu prüfen, ob die Ansteuerungsadresse dieses Speicherelementes als defekt gespeichert ist und im positiven Falle die im Zusammenhang damit gespeicherte Ansteuerungsadresse des betreffenden Reserve-Speicherelementes zu lesen und dasselbe anzusteuern und den Schreib- bzw. Lese- bzw. Löschvorgang auszuführen. Verwendet man unter diesen Voraussetzungen als Sonderspeicher eine Speicheranordnung mit relativ schnellem Zugriff, so kann also jedes Mal während der Dauer der Bearbeitung (Lesen, Schreiben oder Löschen) jeweils eines Speicherelementes aufgrund der Adressensukzession die Ansteuerungsadresse des als nächstes anzusteuernden Speicherelementes abgeleitet werden und mit dieser der Sonderspeicher daraufhin durchgelesen werden, ob diese Ansteuerungsadresse in ihm gespeichert ist. Wenn dies zutrifft, wird die mit dieser Ansteuerungsadresse – also der Ansteuerungsadresse eines defekten Speicherelementes – zusammengespeicherte Ansteuerungsadresse des dem defekten Speicherelement zugeordneten Reserve-Speicherelementes gelesen und für den nächsten Ansteuerungsvorgang der gerade laufenden Bearbeitung anstatt der Ansteuerungsadresse des defekten Speicherelementes verwendet; wenn dies aber nicht zutrifft, was immer erst dann feststeht, wenn jeweils der ganze Speicherinhalt des Sonderspeichers durchgelesen ist, erfolgt die Ansteuerung mit der Ansteuerungsadresse des betreffenden Speicherelementes, weil ihm ein Reserve-Speicherelement nicht zugeordnet ist – weil es eben nicht defekt ist.

Gegenüber dem eingangs angegebenen Speicherungsverfahren wird mit dem zuvor genannten vorgeschlagenen neueren Speicherungsverfahren bereits ein erheblicher Zeitgewinn erzielt. Dies hängt aber sehr davon ab, wie schnell die Lesevorgänge in dem Sonderspeicher abgewickelt werden können. Dies wiederum ist nicht nur von der Arbeitsgeschwindigkeit des Sonderspeichers, sondern auch von seinem jeweiligen Füllungsgrad, also einer variierenden und nicht vorher bestimmbaren Einflussgrösse abhängig. Überschreiten die Lesevorgänge in dem Sonderspeicher zeitlich die Dauer der Bearbeitung (Lesen, Schreiben bzw. Löschen) eines Speicherelementes, so ergeben sich Verlustzeiten; der Vorgang der Bearbeitung des nächsten Speicherelementes kann jedes Mal nicht rechtzeitig beginnen. Dies kann sich bei Magnetplattenspeichern bzw. Magnettrommelspeichern mit bekanntlich stetig umlaufendem Speichermedium dahingehend negativ auswirken, dass in solchen Fällen immer eine volle Plattenumdrehung bzw. Trommelumdrehung abgewartet werden muss, was die Zeitverluste ganz wesentlich ansteigen lässt. Für die Erfindung besteht deshalb die Aufgabe, im Zusammenhang mit der Zuordnung von Reserve-Speicherelementen zu defekten Speicherelementen den Ablauf der Gesamtheit der erforderlichen Vorgänge zur Ansteuerung von Speicherelementen und ggf. von Reservespeicherelementen steuerungsmässig noch zu vereinfachen und den betreffenden Zeitaufwand zu kürzen, insbesondere unabhängig zu machen von dem jeweiligen betriebsmässig vorgegebenen Umfang von zur Zeit defekten Speicherelementen.

Die Erfindung löst die gestellte Aufgabe dadurch, dass in einem ersten Sonderspeicher sowohl die Ansteuerungsadressen aller defekten Speicherelemente gespeichert sind, als auch in Zuordnung zu jeder einzelnen dieser Ansteuerungsadressen jeweils die Ansteuerungsadresse des betreffenden zugeordneten Reserve-Speicherelementes gespeichert ist, dass bei Ansteuerungs eines Speicherabschnittes mittels seiner Anfangsadresse und einer die Anzahl der in ihm zusammengefassten Speicherelemente angebenden Elementenanzahl zugleich anhand dieser Anfangsadresse und der Elementenanzahl aus dem ersten Sonderspeicher die Ansteuerungsadressen der zu dem angesteuerten Speicherelemente gehörenden defekten Speicherelemente zusammen mit den Ansteuerungsadressen der diesen bereits zugeordneten Reserve-Speicherelemente gelesen und geordnet nach der Sukzession der Ansteuerungsadressen der defekten Speicherelemente in einem zweiten Sonderspeicher gespeichert werden, und dass in einem dritten Sonderspeicher mit einer Reihe von Speicherplätzen, deren Anzahl der maximal vorgesehenen Anzahl von Speicherelementen pro Speicherabschnitt angepasst ist, und die jeweils für die Dauer der Ansteuerung eines Speicherabschnittes dessen Speicherelementen einzeln zugeordnet sind, und die insbesondere als Ein-Bit-Speicherplätze ausgebildet sind, anhand der Anfangsadresse und anhand der in dem zweiten Sonderspeicher geordnet gespeicherten Ansteuerungsadressen der defekten Speicherelemente an jedem der Speicherplätze pro Speicherelement des jeweils angesteuerten Speicherabschnittes mittels je einer Defekt-/Nichtdefekt-Information gespeichert wird, ob das betreffende Speicherelement defekt ist oder nicht, und dass bei der sukzessiven Ansteuerung der Speicherelemente des jeweiligen Speicherabschnittes zugleich gemäss den aus dem dritten Sonderspeicher ebenfalls sukzessive gelesenen Defekt-/Nicht-defekt-Informationen jeweils entweder bei Erhalt einer Nicht-defekt-Information die Ansteuerungsadresse des betreffenden Speicherelementes nach Massgabe der Adressen-Sukzession oder bei Erhalt einer Defekt-Information die Ansteuerungsadresse des dem betreffenden defekten Speicherelement zugeordneten Reserve-Speicherelementes gelesen, und jeweils mit der einen oder der anderen Ansteuerungsadresse die Ansteuerung dieses Speicherelementes bzw. Reserve-Speicherelementes durchgeführt wird.

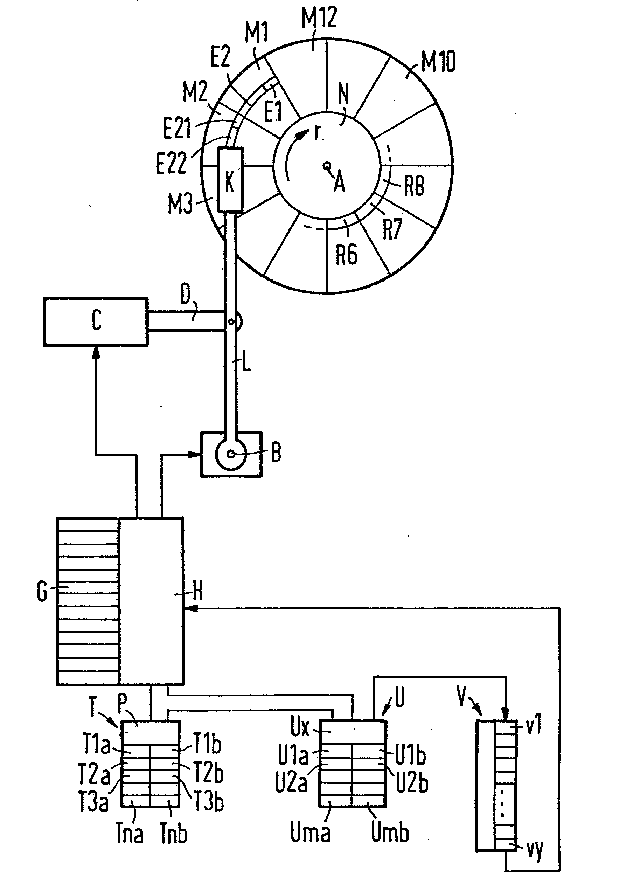

In der Zeichnung ist ein Ausführungsbeispiel der Erfindung nur in wesentlich zu ihrem Verständnis beitragenden Bestandteilen dargestellt; die Zeichnung liegt also der nachfolgenden Beschreibung eines Ausführungsbeispiels zugrunde.

Eine mit konstanter Anzahl von Umdrehungen pro Sekunde um eine Achse A in Drehrichtung r umlaufende Magnetplatte möge in Sektoren M1 bis M12 von je 30 Grad unterteilt sein. Ein Mittelteil N ist für Speicherungszwecke nicht vorgesehen (ähnlich dem Mittelteil auf einer Schallplatte). Ein Schreib- und Lesekopf K dient in bekannter Weise zum Schreiben, d.h. Speichern von Daten und zum Lesen solcher Daten, d.h. zur Entnahme derselben. Eine Entnahme kann zugleich auch zum Löschen dienen. Ebenso kann einem Schreiben ein Löschen vorausgehen. Gelöscht kann auch ohne eine Aufnahme gespeicherter Daten werden. Eine Entnahme kann auch ohne ein Löschen erfolgen.

Der an einem Arm L um einen Drehpunkt B mittels einer Stelleinrichtung C und einer Stange D schwenkbare Kopf K kann zur Ausführung eines Lese- und/oder Schreib- und/oder Löschvorganges jeweils auf eine der Magnetplattenspuren eingestellt werden. Eine Magnetplattenspur verläuft also konzentrisch um den Drehpunkt A (im Gegensatz zu den Rillen auf einer Schallplatte, die spiralförmig verlaufen). Eine Magnetspur bildet einen Kreisring. Die räumliche Lage einer jeden Magnetspur ist durch ihren Durchmesser (Innen- oder Aussendurchmesser oder mittlerer Durchmesser, bzw. Kreisring-Radius) bestimmt. Nach Massgabe desselben ist der Kopf mittels der Stelleinrichtung c auf eine bestimmte Magnetspur einstellbar. Die den Kopf tragenden und seine räumliche Lage bestimmenden Teile (C, D, L, B) werden auch als Positioniereinrichtung bezeichnet. Ferner sei erwähnt, dass eine Magnetplatte beidseitig zur Speicherung von Daten dient, und dass demgemäss zwei Köpfe (jeweils einer auf jeder der beiden Plattenseiten) vorgesehen sind.

Wie in der Zeichnung dargestellt ist, ist eine Magnetplatte in eine Anzahl von Sektoren unterteilt; im vorliegenden Ausführungsbeispiel sind 12 Sektoren M1 bis M12 vorgesehen. Ein Speicherelement, z.B. E1/E2, ist durch den jeweiligen Sektor, z.B. M1, und den jeweiligen «Zylinder» bestimmt; damit ist ein bestimmter, durch seinen Durchmesser (bzw. Radius) definierter Kreisring gemeint – die Kreisringe werden also als «Zylinder» bezeichnet. Ferner ist jeweils die betreffende Plattenseite massgebend. Pro Durchmesser und Sektor gibt es also je zwei Speicherelemente, und zwar jeweils eines auf der einen Plattenseite und eines auf der anderen Plattenseite. Hiervon ist aber im weiteren Fortgang der Beschreibung nicht mehr die Rede, weil dieser Aspekt für die Erfindung nicht von ausschlaggebender Bedeutung ist. Es werden also von hier an immer die Vorgänge bezüglich einer Plattenseite von der Beschreibung behandelt.

Ein Speicherelement, z.B. E1/E2, besteht jeweils aus einem Adressfeld, z.B. E1, und einem dem Zweck der Speicherung irgendwelcher Informationen dienenden Speicherelement-Hauptbestandteil, z.B. E2; dieser Hauptbestandteil wird im Gegensatz zu «Adressfeld» künftig als «Speicherfeld» bezeichnet. Ein Adressfeld und ein Speicherfeld sind zusammen also immer ein Speicherelement.

Die zuvor angegebene Unterteilung des im wesentlichen aus der Magnetplatte bestehenden Gesamtspeichers in eine Vielzahl von Speicherelementen wird auch als «Formatierung» bezeichnet. Die Magnetplatte ist in eine Anzahl von Sektoren M1 bis M12 unterteilt. Ferner ist die Magnetplatte in als Zylinder bezeichnete Kreisringe unterteilt. Ein durch einen Kreisringdurchmesser (bzw. Kreisringradius) und durch einen Sektor (und ausserdem durch die eine oder die andere Magnetplattenseite) definierter Teil des Gesamtspeichers ist jeweils ein Speicherelement. In der Praxis wird auch ein solches Speicherelement als «Speichersektor» bezeichnet.

Das hier behandelte Speicherverfahren für eine in Fernmeldeanlagen insbesondere in einer Fernsprechvermittlungsanlage, eingesetzte Speichereinrichtung kann als Gesamtspeicher anstelle einer Magnetplatte auch ein anders geformtes Speichermedium aufweisen, z.B. eine Magnettrommel. Auch in einem solchen Fall ist eine Unterteilung des gesamten Trommelumfangs in eine Anzahl von Sektoren vorgesehen. Die Magnetspuren sind in einem solchen Falle nicht Kreisringe, sondern sind zylinderförmig und in einem solchen Falle haben die verschiedenen Magnetspuren sämtlich gleiche Durchmesser. Von der Technik der Magnettrommelspeicher her erklärt sich die Bezeichnung «Zylinder» pro Magnetspur. Diese Bezeichnungsweise ist in die Technik der Magnetplattenspeicher sprachlich übernommen worden. – Die weitere Beschreibung kehrt nun zu dem dargestellten Ausführungsbeispiel eines Magnetplattenspeichers zurück.

Es gibt bekanntlich für den praktischen Betrieb in einer Fernmeldeanlage, z.B. in einer Fernsprechvermittlungsanlage, eine Vielzahl von Speicherungsaufgaben. Ausser ausgesprochen kurzzeitigen Speicherungsvorgängen, z.B. zur Speicherung der Wahlinformationen für eine Verbindungsherstellung, gibt es Speicherungsaufgaben für Zwecke, bei denen zu speichernde Informationen etwas länger festgehalten werden müssen. Insbesondere für solche Zwecke dient die in dem beschriebenen Ausführungsbeispiel erläuterte Speichereinrichtung.

Den bei den verschiedenen Speicherungszwecken bestehenden Speicherungsaufgaben entspricht jeweils ein bestimmtes erforderliches Speichervolumen, das von Speicherungsaufgabe zu Speicherungsaufgabe sehr verschieden gross sein kann. Um die insgesamt vorhandene Speicherkapazität gut auszunutzen, werden Speicherabschnitte pro Speicherungsauftrag nicht nach Massgabe des grössten pro Speicherungsauftrag je vorkommenden Speichervolumen-Bedarfs gebildet, sondern zu diesem Zweck ist der Gesamtspeicher in der bereits beschriebenen Weise in Speicherelemente unterteilt, und pro Speicherungsauftrag wird eine dem jeweiligen Speichervolumen-Bedarf entsprechende Anzahl von Speicherelementen jeweils zu einem Speicherabschnitt zusammengefasst. Diese Anzahl ist also wählbar, und zwar je nach dem für den betreffenden Speicherungsauftrag erforderlichen Speicherungsvolumen. Es werden also durch eine wählbare Anzahl von Speicherelementen grössenmässig bestimmte Speicherabschnitte von zusammenhängenden Speicherelementen gebildet. Dieser Zusammenhang von Speicherelementen jeweils innerhalb eines Speicherabschnittes ist durch Adressen der Speicherelemente gegeben, die zu ihrer Ansteuerung dienen. Diese Adressen können jeweils aus denjenigen Daten bestehen, die für die Einstellung der Positioniereinrichtung massgebend sind, können also jeweils den Kreisringradius und den Sektor der Magnetplatte (und die jeweilige Magnetplattenseite) angeben; diese Daten einer Ansteueradresse eines Speicherelementes führen jeweils dazu, dass das gewünschte Speicherelement mit seinem Anfang unter den Kopf K gebracht wird, was bekanntlich durch ein entsprechendes Schwenken des Armes L und durch Drehung der Magnetplatte bewerkstelligt wird.

Wie bereits ausgeführt wurde, besteht jedes Speicherelement aus einem Adressfeld und einem Speicherfeld. Das Speicherfeld dient zur Aufnahme derjenigen Informationen, die in dem jeweils betreffenden Speicherungsauftrag angeliefert werden, zu speichern sind und zum späteren Zeitpunkt wieder gelesen werden sollen. Dagegen dient das Adressfeld eines Speicherelementes zur Aufnahme der eigenen Adresse desselben. Diese Adresse kann identisch sein mit der bereits beschriebenen Adresse pro Speicherelement, bei der es sich um die physikalische Adresse handelt, die die örtliche Lage eines Speicherelementes auf der Magnetplatte angibt. Die im Adressfeld jedes Speicherelementes gespeicherte Adresse kann aber auch anders zusammengesetzt sein, kann z.B. aus einer fortlaufenden Nummer bestehen. Die im Adressfeld eines Speicherelementes gespeicherte Adresse dient dazu, dass nach Ansteuerung eines Speicherelementes diese Adresse gelesen wird, wodurch überprüfbar ist, ob diese Ansteuerung zum gewünschten Ziel geführt hat, ob also das jeweils anzusteuernde Speicherelement auch tatsächlich angesteuert worden ist.

Wie die praktische Erfahrung zeigt, kommt es immer wieder vor, dass punktuell Defekte im Speichermedium auftreten, was sich darin zeigt, dass ein Speicherelement nicht mehr beschreibbar und/oder nicht mehr lesbar und/oder nicht mehr löschbar ist; ein solcher Defekt kann im Speicherfeld und/oder im Adressfeld eines Speicherelementes liegen. Solche Defekte treten sporadisch auf und sind in der Regel völlig unregelmässig über den Gesamtspeicher verteilt.

Werden nun in der beschriebenen Weise grössenmässig bestimmte Speicherabschnitte von hinsichtlich ihrer Ansteuerung zusammenhängenden und mittels Adressen einzeln sukzessive ansteuerbaren Speicherelementen gebildet, so kann es vorkommen, dass in einer solchen Reihe von ansteuerungsmässig zusammenhängenden Speicherelementen irgendeines dieser Speicherelemente mit einem Defekt behaftet ist. Um eine solche Störung der Speicherung-Systematik (es sollen grössenmässig bestimmte Speicherabschnitte von hinsichtlich ihrer Ansteuerung zusammenhängenden und mittels Adressen einzeln sukzessive nacheinander ansteuerbaren Speicherelementen gebildet werden) in ihrer Auswirkung zu eliminieren, sind in einem Reserveabschnitt des Gesamtspeichers Reserve-Speicherelemente, z.B. R6, R7, R8, . . ., enthalten. Ein solcher Reserveabschnitt kann einen Teil der Speicherelemente eines Kreisringes, oder sämtliche Speicherelemente eines Kreisringes oder auch mehrere Speicherelemente eines Kreisringes («Zylinder») umfassen. Der Reserveabschnitt des Gesamtspeichers kann aus dem innersten Kreisring oder den innersten Kreisringen oder den äussersten Kreisringen auf der Magnetplatte eines Magnetplattenspeichers bestehen. Im vorliegenden Falle mögen die Speicherelemente der innersten beiden Kreisringe (Zylinder) der dargestellten Magnetplatte als Reserve-Speicherelemente vorgesehen sein und den Reserveabschnitt bilden.

Die in dem Reserveabschnitt des Gesamtspeichers enthaltenen Reserve-Speicherelemente (. . ., R6, R7, R8; . .) sind vor einem der Bildung der ansteuerungsmässig zusammenhängenden Speicherabschnitte dienenden unmittelbaren Zugriff durch die nicht im einzelnen dargestellte Steuereinrichtung der erläuterten Speichereinrichtung geschützt; diese Speicherelemente sind also von der Bildung der ansteuerungsmässig zusammenhängenden Speicherabschnitte ausgeschlossen. Diese Reserve-Speicherelemente dienen vielmehr als Ersatz für den Fall eines Defektes eines der übrigen Speicherelemente.

Tritt der Fall auf, dass eines der nicht zum Reserveabschnitt gehörenden Speicherelemente in der angegebenen Weise einen Defekt aufweist, so wird diesem ein Reserve-Speicherelement zugeordnet, und bei der Ansteuerung der Speicherelemente eines Speicherabschnittes wird in die sukzessive nacheinander erfolgende Ansteuerung seiner Speicherelemente dann, wenn das defekte Speicherelement an die Reihe kommt, statt seiner das ihm zugeordnete Reserve-Speicherelement angesteuert. Hierzu sind in einem einer Speicheransteuereinrichtung H der anhand der Zeichnung erläuterten Speichereinrichtung zugeordneten Ansteuerspeicher G die Ansteuerungsadressen sämtlicher jeweils zu einem Speicherabschnitt zusammengefassten Speicherelemente gespeichert. Diese Ansteuerungsadressen dienen also sukzessive nacheinander zur Ansteuerung der Speicherelemente jeweils eines Speicherabschnittes. Bei bekannten Anordnungen wurde jeweils für das defekte Speicherelement die Ansteuerungsadresse des ihm zugeordneten Reserve-Speicherelementes im Adressfeld des defekten Speicherelementes gespeichert. Wurde dann das betreffende defekte Speicherelement erreicht, so wurde aus seinem Adressfeld anstatt seine eigene Adresse vielmehr die Adresse des ihm zugeordneten Reserve-Speicherelementes gelesen, woraufhin nunmehr dieses Reserve-Speicherelement angesteuert wurde. Schwierigkeiten ergaben sich jedoch dann, wenn der betreffende Defekt nicht nur im Speicherfeld oder anstatt im Speicherfeld des betreffenden Speicherelementes vielmehr in seinem Adressfeld lag. Nur wenn ein solcher Fall nicht vorlag, wenn also ein aufgetretener Defekt im Speicherfeld eines Speicherelementes lag, konnte auch in bekannten Anordnungen bei der einzeln-sukzessiven Ansteuerung der Speicherelemente eines Speicherabschnittes mit einem defekten Speicherelement bei Erreichen des letzteren statt seiner das diesem zugeordnete Reserve-Speicherelement in den Ansteuerzyklus eingereicht werden und anstelle des defekten Speicherelementes einem Schreibvorgang bzw. Lesevorgang bzw. Löschungsvorgang unterzogen werden.

In Speicherungseinrichtungen der bekannten Art, wie auch in der anhand der Zeichnung beschriebenen erfindungsgemässen Speichereinrichtung ist also eine Speicheransteuereinrichtung H vorgesehen, die einen Ansteuerspeicher G enthält. Darin ist pro Speicherauftrag jeweils die das erste Speicherelement eines Speicherabschnittes bezeichnende Ansteuerungsadresse sowie die jeweils zu dem betreffenden Speicherabschnitt gehörende Anzahl von Speicherelementen gespeichert. Es brauchen in dem Ansteuerspeicher G also nicht sämtliche Ansteuerungsadressen aller jeweils zu einem Speicherabschnitt zusammengefassten Speicherelementen gespeichert zu sein, sondern jeweils nur die Anfangsadresse und die Anzahl der Speicherelemente pro Speicherabschnitt. Anhand dieser Daten vermag die Speicheransteuereinrichtung H sukzessive nacheinander die Speicherelemente eines Speicherabschnittes anzusteuern.

Tritt nun beim erfindungsgemässen Ausführungsbeispiel ein Defekt in einem Speicherelement auf, was sich daran zeigt, dass das betreffende Speicherelement nicht mehr störungsfrei beschreibbar und/oder lesbar und/oder löschbar ist (was sein Speicherfeld und/oder sein Adressfeld betreffen kann), so wird die Ansteuerungsadresse des als defekt festgestellten Speicherelementes in einem Sonderspeicher T gespeichert. Dieser Sonderspeicher enthält in zwei Spalten T1a bis Tna und T1b bis Tnb Speicherzellen T1a bis Tnb, die paarweise einander zugeordnet sind, z.B. die Speicherzellen T1a und T1b. In diesem Sonderspeicher werden die Ansteuerungsadressen aller defekten Speicherelemente und in Zuordnung zu jeder einzelnen derselben die Ansteuerungsadresse des jeweils betreffenden zugeordneten Reserve-Speicherelementes gespeichert. Wird also z.B. festgestellt, dass das Speicherelement E1/E2 einen Defekt aufweist, so wird ihm ein Reserve-Speicherelement, z.B. das Speicherelement R7 zugeordnet. Die Ansteuerungsadresse des defekten Speicherelementes E1/E2 möge nun in der Speicherzelle T2a und die Ansteuerungsadresse des ihm zugeordneten Reserve-Speicherelementes, z.B. des Reserve-Speicherelementes R7, möge in der Speicherzelle T2b gespeichert werden, wobei davon ausgegangen ist, dass die Speicherzellen T1a und T1b bereits anderweitig zur Speicherung von Ansteuerungsadressen verwendet sind.

Wie bereits ausgeführt wurde, ist für die Ansteuerung eines jeden Speicherabschnittes in der Speicheransteuereinrichtung H jeweils die Anfangsadresse des ersten Speicherelementes und die Anzahl von zu dem betreffenden Speicherabschnitt jeweils gehörenden Speicherelemente gespeichert. Hieraus bildet die Speicheransteuereinrichtung H sukzessive nacheinander die Ansteuerungsadressen der einzelnen Speicherelemente, die in dem betreffenden Speicherabschnitt zusammengefasst sind, und verwendet sie einzeln nacheinander zur Ansteuerung eines jeden dieser Speicherelemente. Gelangt nun die Speicheransteuereinrichtung H zu einem Speicherelement, das bereits als defekt erkannt ist, so ist dafür zu sorgen, dass anstelle dieses Speicherelementes vielmehr das ihm zugeordnete Reserve-Speicherelement angesteuert wird. Zu diesem Zweck sind die Ansteuerungsadressen jeweils eines defekt gewordenen Speicherelementes und des ihm zugeordneten Reserve-Speicherelementes in zwei einander zugeordneten Speicherzellen des Sonderspeichers T in der bereits angegebenen Weise in dem Sonderspeicher T gespeichert. Wie die Zeichnung zeigt, ist dieser Sonderspeicher ein erster von drei Sonderspeichern T, U und V. Im ersten Sonderspeicher T werden nun Ansteuerungsadressen von defekt gewordenen Speicherelementen jeweils zusammen mit Ansteuerungsadressen von einzeln zugeordneten Reserve-Speicherelementen gespeichert. Diese Speicherung erfolgt bezüglich der Speicherzellen T1a bis Tna und dementsprechend auch bezüglich der Speicherzellen T1b bis Tnb in der zufälligen Reihenfolge des Auftretens bzw. der Erkennung von defekten Anspeicherelementen. Im ersten Sonderspeicher T sind also die Ansteuerungsadressen defekt gewordener Speicherelemente in einer ungeordneten Reihenfolge gespeichert.

Ausser dem ersten Sonderspeicher T sind der zweite Sonderspeicher U und der dritte Sonderspeicher V vorgesehen. Der zweite Sonderspeicher U ist ähnlich aufgebaut, wie der erste Sonderspeicher T und weist ebenso wie dieser paarweise angeordnete Speicherzellen U1a und U1b, ferner U2a und U2b bis Uma und Umb auf. Jedoch ist die Anzahl von Speicherzellen beim zweiten Sonderspeicher U kleiner als die Anzahl von Speicherzellen beim ersten Sonderspeicher T.

Wird mit Hilfe der Speicheransteuereinrichtung H ein bestimmter Speicherabschnitt mit Hilfe der Anfangsadresse und der Anzahl von Speicherelementen, die in dem angesteuerten Speicherabschnitt zusammengefasst sind, angesteuert, so verwendet die Speicheransteuerung diese Ansteuerungsdaten nicht nur für diese Speicheransteuerungsondern überträgt sie auch zum ersten Sonderspeicher T. Auch dieser verfügt über eine Speichersteuerung P. Diese dient u.a. dazu, die Ansteuerungsadressen von defekt gewordenen Speicherelementen zusammen mit den innen jeweils zugeordneten Ansteuerungsadressen von Reserve-Speicherelementen in die Speicherzellen des ersten Sonderspeichers T einzuschreiben, was zuvor bereits beschrieben wurde. Die Speichersteuerung P empfängt darüber hinaus aber auch bei der zuletzt angesprochenen Ansteuerung eines Speicherabschnittes von der Speicheransteuereinrichtung H die Anfangsadresse und die Angaben über die Anzahl von in dem betreffenden Speicherabschnitt zusammengefassten Speicherelementen. Anhand dieser Anfangsadresse und dieser Anzahl überprüft die Speichersteuerung P sämtliche in ihren Speicherzellen T1a bis Tna gespeicherten Ansteuerungsadressen von defekt gewordenen Speicherelementen daraufhin, welches dieser defekt gewordenen Speicherelemente zu dem neu angesteuerten Speicherabschnitt gehört. Die Speichersteuerung P liest also aus ihren Speicherzellen T1a bis Tnb die Ansteuerungsadressen aller derjenigen defekt gewordenen Speicherelemente, die zu dem neu angesteuerten Speicherabschnitt gehören; sie liest dabei zugleich auch immer die Ansteuerungsadresse des jeweiligen Speicherelement zugeordneten Reserve-Speicherelementes. Diese Ansteuerungsadressen, und zwar immer jeweils zusammen die Ansteuerungsadresse eines defekt gewordenen Speicherelementes und die Ansteuerungsadresse des ihm zugeordneten Reserve-Speicherelementes, überträgt die Speichersteuerung P zum zweiten Sonderspeicher U. Dessen Speichersteuerung Ux schreibt diese Ansteuerungsadressen in die Speicherzellen U1a bis Umb des zweiten Sonderspeichers U ein, und zwar wieder in der Weise, dass z.B. in der Speicherzelle U1a die Ansteuerungsadresse eines defekt gewordenen Speicherelementes und in die Speicherzelle U1b die Ansteuerungsadresse des ihm zugeordneten Reserve-Speicherelementes eingeschrieben wird. Bei dieser Übertragung und Speicherung der Ansteuerungsadresse zum bzw. im zweiten Sonderspeicher U werden die Ansteuerungsadressen, die zu dem neu anzusteuernden Speicherabschnitt gehören, geordnet. Sie werden nach der Reihenfolge der defekt gewordenen Speicherelemente des betreffenden Speicherabschnittes geordnet. Diesen Ordnungsvorgang kann die Speichersteuerung P oder die Speichersteuerform in an sich bekannter Weise vornehmen.

Wird also ein Speicherabschnitt neu angesteuert, so werden also gleich zu Beginn dieser Ansteuerung die Ansteuerungsadressen aller zu diesem Speicherabschnitt gehörenden defekt gewordenen Speicherelemente geordnet nach ihrer Reihenfolge, in der sie angesteuert werden, in den zweiten Sondernspeicher U übernommen und hier zusammen jeweils mit den Ansteuerungsadressen der zugeordneten Reserve-Speicherelemente gespeichert. Während also im ersten Sonderspeicher T die Ansteuerungsadressen sämtlicher defekt gewordener Speicherelemente gespeichert sind, werden im zweiten Sonderspeicher U immer nur zu Beginn einer neuen Ansteuerung eines Speicherabschnittes die Ansteuerungsadressen der in ihm enthaltenen defekt gewordenen Speicherelemente gespeichert (jeweils mit ihnen zusammen immer die Ansteuerungsadresse des einem defekt gewordenen Speicherelement einzeln zugeordneten Reserve-Speicherelementes).

Wie bereits erwähnt, ist ausserdem auch noch der dritte Sonderspeicher V vorgesehen. Er ist als ein Schieberegister mit Speicherplätzen v1 bis vy ausgebildet. Jeder Speicherplatz dient zur Aufnahme einer Ein-Bit-Information. Zu Beginn eines einen Speicherabschnitt betreffenden Ansteuerungsvorganges durch die Speicheransteuereinrichtung K und im Anschluss an den zuletzt beschriebenen Vorgang der Übertragung von Ansteuerungsadressen vom ersten Sonderspeicher T zum zweiten Sonderspeicher U gibt dessen Speichersteuerung Ux für jedes der zu dem neu angesteuerten Speicherabschnitt gehörenden Speicherelemente je eine Ein-Bit-Information zum dritten Sonderspeicher V hin ab. Die Speichersteuerung U empfängt von der Speicheransteuereinrichtung H die betreffende Anfangsadresse des Speicherabschnittes und die Anzahl der Speicherelemente, die zu diesem Speicherabschnitt gehören. Die Speichersteuerung U prüft nun sukzessive nacheinander die Ansteuerungsadressen der betreffenden Speicherelemente des anzusteuernden Speicherabschnittes durch. Anhand der in den Speicherzellen U1a bis Uma gespeicherten Ansteuerungsadressen der defekt gewordenen Speicherelemente erkennt die Speichersteuerung Ux, welches der zu dem betreffenden Speicherabschnitt gehörenden Speicherelemente defekt ist und welches nicht. Demgemäss gibt die Speichersteuerung U für jedes der zu dem angesteuerten Speicherabschnitt gehörenden Speicherelemente je eine Defekt-/Nicht-defekt-Information zum dritten Sonderspeicher V hin ab. Hier werden diese Informationen nacheinander an den Speicherplätzen v1 bis vy gespeichert. Ist dieser Vorgang abgeschlossen, so steht also an den Speicherplätzen v1 bis vy je eine Information für jedes Speicherelement, das zu dem angesteuerten Speicherabschnitt gehört; diese Information pro Speicherelement sagt, ob das betreffende Speicherelement defekt ist oder nicht.

Beginnt nun die Speicheransteuereinrichtung H die Ansteuerungsvorgänge zur Ansteuerung der einzelnen zu dem betreffenden Speicherabschnitt gehörenden Speicherelemente, so empfängt sie hierzu nacheinander vom dritten Sonderspeicher V die Defekt-Nicht-defekt-Informationen, die die einzelnen Speicherelemente dieses Speicherabschnittes betreffen. Anhand dieser Informationen erkennt die Speicheransteuereinrichtung H, ob das jeweils anzusteuernde Speicherelement defekt ist oder nicht. Ist das jeweils anzusteuernde Speicherelement nicht defekt, so erfolgt die Ansteuerung der betreffenden Speicherelemente in der bereits beschriebenen Weise gemäss der Sukzession der Ansteuerungsadressen, die sich aus der Anfangsadresse und der Anzahl von Speicherelementen pro Speicherabschnitt ergibt. Gibt jedoch eine ein Speicherelement betreffende Defekt-/Nicht-defekt-Information an, dass das betreffende Speicherelement defekt ist, so gibt die Speicheransteuereinrichtung H die Adresse des nach der Adressen-Sukzession an die Reihe kommenden defekten Speicherelementes zum zweiten Sonderspeicher U hin ab, und fordert mit dieser Adresse des defekten Speicherelementes den zweiten Sonderspeicher U auf, die Ansteuerungsadresse des dem betreffenden defekten Speicherelement in der betreffenden Weise zugeordneten Reserve-Speicherelementes an die Speicheransteuereinrichtung H zu übertragen. Die Speicheransteuereinrichtung H besitzt nun für den nächsten Ansteuerungsvorgang die demgemäss der Adressen-Sukzession an die Reihe gekommenen defekten Speicherelement entsprechende Reserve-Speicherelement-Ansteuerungsadresse und nimmt mit Hilfe dieser Ansteuerungsadresse Ansteuerung des betreffenden zugeordneten Reserve-Speicherelementes vor.

In dem ersten Sonderspeicher T sind also sowohl die Ansteuerungsadressen aller defekten Speicherelemente gespeichert als auch in Zuordnung zu jeder einzelnen dieser Ansteuerungsadressen jeweils die Ansteuerungsadressen der betreffenden zugeordneten Reserve-Speicherelemente. Bei Ansteuerung eines Speicherabschnittes mittels seiner Anfangsadresse und der die Anzahl der in ihm zusammengefassten Speicherelemente angebenden Elementenanzahl werden aus dem ersten Sonderspeicher die Ansteuerungsadressen der zu dem angesteuerten Speicherabschnitt gehörenden defekten Speicherelementes zusammen mit den Ansteuerungsadressen der diesen bereits zugeordneten Reserve-Speicherelemente gelesen und geordnet nach der Sukzession der Ansteuerungsadressen der defekten Speicherelemente in dem zweiten Sonderspeicher gespeichert. Der dritte Sonderspeicher weist so viel Speicherplätze auf, wie ein Speicherabschnitt maximal an Speicherelementen umfassen kann. Die Anzahl der Speicherplätze im dritten Sonderspeicher ist also dieser maximalen Anzahl angepasst. Die Speicherplätze des dritten Sonderspeichers sind jeweils für die Dauer der Ansteuerung eines Speicherabschnittes dessen Speicherelementen einzeln zugeordnet. Die Speicherplätze des dritten Sonderspeichers brauchen nur als Ein-Bit-Speicherplätze ausgebildet zu sein. Dieser Sonderspeicher kann deshalb in besonders einfacher Weise als Schieberegister ausgebildet sein. In dem dritten Sonderspeicher wird anhand der Anfangsadresse und anhand der in dem zweiten Sonderspeicher geordnet gespeicherten Ansteuerungsadressen der defekten Speicherelemente an jedem der Speicherplätze pro Speicherelement des jeweils angesteuerten Speicherabschnittes mittels je einer Defekt- Nicht-defekt-Information gespeichert, ob das betreffende Speicherelement defekt ist oder nicht. Bei der sukzessiven Ansteuerung der Speicherelemente des jeweiligen Speicherabschnittes durch die Speicheransteuereinrichtung H wird zugleich gemäss den aus dem dritten Sonderspeicher ebenfalls sukzessive gelesenen Defekt-/Nicht-defekt-Informationen jeweils entweder bei Erhalt einer Nicht-Defekt-Information die Ansteuerungsadresse des betreffenden Speicherelementes gemäss der Adressen-Sukzession oder bei Erhalt einer Defekt-Information die Ansteuerungsadresse des dem betreffenden defekten Speicherelement zugeordneten Reserve-Speicherelementes aus dem zweiten Sonderspeicher gelesen. Die Ansteuerung dieses Speicherelementes bzw. Reserve-Speicherelementes erfolgt dann durch die Speicheransteuereinrichtung H mit der einen oder der anderen dieser beiden Ansteuerungsadressen.

**Patentanspruch**

1. Speicherungsverfahren für eine in Fernmeldeanlagen, insbesondere Fernsprechvermittlungsanlagen, eingesetzte Speichereinrichtung, in der wenigstens ein durch Formatierung aus einer Vielzahl von Speicherelementen, z.B. Speichersektoren, einheitlichen Speichervolumens bestehender Gesamtspeicher, z.B. Magnetplatte für Magnetplattenspeicher, vorgesehen ist, und in der durch eine wählbare Anzahl von Speicherelementen (E1, E2) grössenmässig bestimmte Speicherabschnitte von hinsichtlich ihrer Ansteuerung zusammenhängenden und mittels Adressen einzeln sukzessive ansteuerbaren Speicherelementen gebildet sind, und in der in einem Reserveabschnitt des Gesamtspeichers enthaltene Reserve-Speicherelemente (R6...R8) vor einem der Bildung der ansteuerungsmässig zusammenhängenden Speicherabschnitte dienenden unmittelbaren Zugriff geschützt, also davon ausgeschlossen sind, und in der bei Defekt eines Speicherelementes diesem ein Reserve-Speicherelement zugeordnet wird, indem für das defekte Speicherelement die Ansteuerungsadresse des Reserve-Speicherelementes gespeichert wird, wodurch bei der einzeln-sukzessiven Ansteuerung der Speicherelemente eines Speicherabschnittes mit einem defekten Speicherelement bei Erreichen des letzteren statt seiner das diesem zugeordnete Reserve-Speicherelement in den Ansteuerzyklus eingereiht ist und anstelle des defekten Speicherelementes einem Schreibvorgang bzw. Lesevorgang bzw. Löschungsvorgang unterzogen wird, dadurch gekennzeichnet, dass in einem ersten Sonderspeicher (T) sowohl die Ansteuerungsadressen aller defekten Speicherelemente gespeichert sind, als auch in Zuordnung zu jeder einzelnen dieser Ansteuerungsadressen jeweils die Ansteuerungsadresse des betreffenden zugeordneten Reserve-Speicherelementes gespeichert ist, dass bei Ansteuerung eines Speicherabschnittes mittels seiner Anfangsadresse und einer die Anzahl der in ihm zusammengefassten Speicherelemente angebenden Elementenanzahl zugleich anhand dieser Anfangsadresse und der Elementenanzahl aus dem ersten Sonderspeicher (T) die Ansteuerungsadressen der zu dem angesteuerten Speicherabschnitt gehörenden defekten Speicherelemente zusammen mit den Ansteuerungsadressen der diesen bereits zugeordneten Reserve-Speicherelemente gelesen und geordnet nach der Sukzession der Ansteuerungsadressen der defekten Speicherelemente in einem zweiten Sonderspeicher (U) gespeichert werden, und dass in einem dritten Sonderspeicher (V) mit einer Reihe von Speicherplätzen (v1...vy), deren Anzahl der maximal vorgesehenen Anzahl von Speicherelementen pro Speicherabschnitt angepasst ist, und die jeweils für die Dauer der Ansteuerung eines Speicherabschnittes dessen Speicherelementen einzeln zugeordnet sind, und die insbesondere als Ein-bit-Speicherplätze ausgebildet sind, anhand der Anfangsadresse und anhand der in dem zweiten Sonderspeicher (U) geordnet gespeicherten Ansteuerungsadressen der defekten Speicherelemente an jedem der Speicherplätze pro Speicherelement des jeweils angesteuerten Speicherabschnittes mittels je einer Defekt-/Nicht-defekt-Information gespeichert wird, ob das betreffende Speicherelement defekt ist oder nicht, und dass bei der sukzessiven Ansteuerung der Speicherelemente des jeweiligen Speicherabschnittes zugleich gemäss den aus dem dritten Sonderspeicher ebenfalls sukzessive gelesenen Defekt-/Nicht-defekt-Informationen jeweils entweder bei Erhalt einer Nicht-defekt-Information die Ansteuerungsadresse des betreffenden Speicherelementes nach Massgabe der Adressen-Sukzession oder bei Erhalt einer Defekt-Information die Ansteuerungsadresse des dem betreffenden defekten Speicherelement zugeordneten Reserve-Speicherelementes gelesen, und jeweils mit der einen oder der anderen Ansteuerungsadresse die Ansteuerung dieses Speicherelementes bzw. Reserve-Speicherelementes durchgeführt wird.

## Revendication

1. Procédé de mémorisation pour un dispositif de mémoire monté dans des installations de télécommunications, notamment des installations de commutation téléphonique, et dans lequel il est prévu au moins une mémoire complète, par exemple des disques magnétiques pour une mémoire à disques magnétiques, constituée par formatage à partir d'une multiplicité d'éléments de mémoire, par exemple de secteurs de mémoire, possédant un volume de mémoire identique, et dans lequel des sections de mémoire, dont la taille est déterminée par un nombre, pouvant être choisi, d'éléments de mémoire (E1, E2), sont formées hors des éléments de mémoire qui sont réunis pour leur commande et peuvent être commandées successivement et individuellement au moyen d'adresses, et dans lequel des éléments de mémoire de réserve (R6...R8) contenus dans une section de réserve de la mémoire complète sont protégés vis-à-vis d'un accès direct utilisé pour la formation des sections de mémoire réunies du point de vue de la commande, c'est-à-dire que tout accès direct à ces éléments de mémoire de réserve est exclu, et dans lequel, dans le cas d'un défaut d'un élément de mémoire, à cet élément de mémoire se trouve associé un élément de mémoire de réserve dans lequel se trouve mémorisée, pour l'élément de mémoire défectueux, l'adresse de commande de l'élément de mémoire de réserve, grâce à quoi, lors de la commande individuelle et successive des éléments de mémoire d'une section de mémoire comportant un élément de mémoire défectueux, lorsque ce dernier est atteint, l'élément de mémoire de réserve, qui lui est associé, est alors inséré, à sa place, dans le cycle de commande et fait l'objet, à la place de l'élément de mémoire défectueux, d'un processus d'enregistrement ou d'un processus de lecture ou d'un processus d'effacement, caractérisé par le fait que dans une première mémoire particulière (T) se trouvent mémorisées aussi bien les adresses de commande de tous les éléments de mémoire défectueux que, en association avec chacune de ces adresses de commande, l'adresse de commande respective de l'élément de mémoire de réserve associé considéré, que lors de la commande d'une section de mémoire à l'aide d'une adresse et d'un nombre d'éléments, indiquant le nombre des éléments de mémoire réunis dans cette section de mémoire, simultanément sur la base de cette adresse initiale et du nombre d'éléments tirés de la première mémoire particulière (T), les adresses de commande des éléments de mémoire défectueux appartenant à la section de mémoire commandée ainsi que les adresses de commande des éléments de mémoire de réserve déjà associés à ces éléments de mémoire sont lues et sont mémorisées dans une seconde mémoire particulière (U), en étant rangées conformément à la succession des adresses de commande des éléments de mémoire défectueux, et que dans une troisième mémoire particulière (V) possédant une série de cases de mémoire (v1...vy), dont le nombre est adapté au nombre maximum prévu d'éléments de mémoire par section de mémoire et qui sont associés individuellement, respectivement pendant la durée de la commande d'une section de mémoire, aux éléments de mémoire de cette section et sont réalisés notamment sous la forme de cases de mémoire à un bit, se trouve mémorisé, au moyen d'une information respective de défaut/d'absence de défaut et sur la base de l'adresse initiale et sur la base des adresses de commande, mémorisées de façon rangée dans la seconde mémoire particulière (U), des éléments de mémoire défectueux, au niveau de chacune des cases de mémoire pour chaque élément de mémoire du secteur de mémoire commandé, le fait que l'élément de mémoire considéré est défectueux ou non, et que simultanément, lors de la commande successive des éléments de mémoire de la section de mémoire respective et conformément aux informations défaut/absence de défaut également lues d'une manière successive à partir de la troisième mémoire particulière, soit l'adresse de commande de l'élément de mémoire considéré est lue en fonction de la succession des adresses, dans le cas de l'obtention d'une information d'absence de défaut, soit l'adresse de commande de l'élément de mémoire de réserve associé à l'élément de mémoire défectueux considéré est lue lors de l'obtention d'une information de défaut, et la commande de cet élément de mémoire ou de cet élément de mémoire de réserve est exécutée respectivement au moyen de l'une ou de l'autre adresse de commande.

## Claim

1. A method of storage for a storage device used in telecommunications systems, in particular telephone exchange systems, in which is provided at least one complete store, composed by formatting from a plurality of storage elements, e.g. storage sectors, of uniform storage volume, is provided, e.g. a magnetic disc for magnetic disc stores, and in which storage sections, specified in size by a selectable number of storage elements (E1, E2) are formed by storage elements which are linked in respect of their actuation and can be driven individually and successively by means of addresses, and in which reserve storage elements (R6...R8), contained in a reserve section of the complete store, are protected from – and thus excluded from – direct access for the formation of the storage sections which are linked in respect of their actuation, and in which, in the event of a defect of a storage element, said storage element is assigned a reserve storage element in that for the defective storage element the actuating address of the reserve storage element is stored, whereby with the individual successive actuation of the storage elements of a storage section containing a defective storage element, when the defective storage element is reached, instead of the defective storage element the reserve storage element assigned thereto is included in the actuating cycle and is subjected, in place of the defective storage element, to a write procedure or read procedure or erasure procedure, characterised in that a first special store (T) stores both the actuating addresses of all the defective storage elements and, in assignment to each of these individual actuating addresses, the actuating address of the respective assigned reserve storage element, that simultaneously to the actuation of a storage section by means of its start address and by means of an element number, indicating the number of storage elements combined in said storage section, on the basis of this start address and this element number, the actuating addresses of the defective storage elements, assigned to the actuated storage section, together with the actuating addresses of the reserve storage elements already assigned to said defective storage elements, are read out from the first special store (T) and, classified in accordance with the succession of the actuating addresses of the defective storage elements, are stored in a second special store (U), and that in a third special store (V) which comprises a series of storage positions (v1...vy), the number of which is adapted to the maximum number of storage elements provided in each storage section, and which are each individually assigned to the storage elements of a storage section for the duration of its actuation, and which comprise in particular 1-bit storage positions, on the basis of the start address and on the basis of the actuating addresses, stored in classified form in the second special store (U), of the defective storage elements, in each of the storage positions, in respect of each storage element of the respective actuated storage section, it is stored by means of an item of defective/non-defective information whether the respective storage element is defective or not, and that simultaneously to the successive actuation of the storage elements of the respective storage section, in accordance with the items of defective/non-defective information likewise read successively from the third special store, when an item of non-defective information occurs the actuating address of the respective storage element is read in accordance with the address succession, or when an item of defective information occurs the actuating address of the reserve storage element, assigned to the respective defective storage element, is read, and the one or the other actuating address is used to actuate this storage element or reserve storage element respectively.

## 1/1